Europäisches Patentamt

European Patent Office

Office européen des brevets

(11) Publication number: **0 028 081**
**B1**

(12) **EUROPEAN PATENT SPECIFICATION**

(45) Date of publication of patent specification: **20.08.86**

(21) Application number: **80303532.8**

(22) Date of filing: **08.10.80**

(51) Int. Cl.⁴: **G 01 N 29/00, G 01 M 13/04**

(54) Method and apparatus for detecting frictional wear in plain metal bearings.

(30) Priority: **08.10.79 JP 128918/79**

(43) Date of publication of application:
**06.05.81 Bulletin 81/18**

(45) Publication of the grant of the patent:
**20.08.86 Bulletin 86/34**

(84) Designated Contracting States:
**DE FR SE**

(56) References cited:
**FR-A-2 110 120**
**FR-A-2 388 274**
**US-A-3 699 806**
**US-A-3 712 130**
**US-A-3 971 249**
**US-A-4 007 630**

(73) Proprietor: **Hitachi, Ltd.**
**5-1, Marunouchi 1-chome**
**Chiyoda-ku Tokyo 100 (JP)**

(72) Inventor: **Yoneyama, Takao**
**3-17-2-204 Moriyama**
**Hitachi Ibaraki (JP)**
Inventor: **Satoh, Ichiya**
**161-41 Ishinazaka**
**Hitachi Ibaraki (JP)**
Inventor: **Obara, Sanshiro**
**1-32-1-204 Nishinarusawa**
**Hitachi Ibaraki (JP)**
Inventor: **Inoue, Tomoaki**
**1-32-2-402 Nishinarusawa**
**Hitachi Ibaraki (JP)**
Inventor: **Koga, Tsuguaki**
**1-32-3-403 Nishinarusawa**
**Hitachi Ibaraki (JP)**

(74) Representative: **Paget, Hugh Charles Edward**
**et al**
**MEWBURN ELLIS & CO. 2/3 Cursitor Street**
**London EC4A 1BQ (GB)**

Courier Press, Leamington Spa, England.

## Description

This invention relates to a method and apparatus for detecting frictional wear in a plain bearing of a rotary machine.

Metal wipe or frictional wear of metal bearings can lead to the occurrence of serious accidents, particularly when such wear leads to the seizure of a bearing in a large machine such as a large steam turbine generator which rotates at high speed. It is, therefore, highly desirable to detect such frictional wear in the plain bearings while the machine is in its operating mode before actual failure such as axial vibration or rubbing occurs.

Temperature monitoring of bearings is one of the most popular detection methods for this purpose (see "INSTRUMENTATION TECHNOLOGY" September 1977, pages 59—60). However this detection method only works after a considerable amount of frictional wear has occurred.

US—A—4 007 630 discloses a method of and an apparatus for detecting frictional wear in a plain bearing of a rotary machine by detecting an ultrasonic signal produced upon rotation of a part in the bearing, by means of a transducer located so as to receive said ultrasonic signal, and the output signal of the transducer is monitored so as to detect a substantial periodicity of the output signal indicative of such frictional wear.

It has been found difficult to detect frictional wear in its initial stages before rubbing leading to overheating occurs. It is therefore an object of this invention to provide a method and apparatus for detecting the occurrence of metal wipe or frictional wear at an early stage.

The method of the invention is characterised in that, in order to determine the presence of the frictional wear which occurs in operation prior to the advent of rubbing damage, the output signal of a transducer detecting an ultrasonic signal is monitored during a turning operation of the machine at a rotary speed substantially less than the operation speed, and the output signal of the transducer arising in a predetermined period of time is compared with the output signal arising in an immediately preceding such predetermined period of time.

The apparatus of the invention is characterised by a turning decision circuit for receiving a rotation frequency signal and the output signal of a transducer for detecting an ultrasonic signal produced in the bearing and for deciding whether or not the machine is in a turning operation at a speed substantially less than the operation speed, and for passing the output signal of the transducer while the rotary machine is in a turning operation, means for receiving the output signal from the turning decision circuit and for converting it into a pulse signal, the periodicity detecting circuit including means for receiving and means for storing the pulse signals received over a predetermined period of time, means for comparing such a stored pulse signal relating to a predetermined period of time with that relating to an immediately preceding predetermined period of time and means for providing an output signal indicative of an occurrence of frictional wear in dependence on the result of this comparison.

It is relatively simple to monitor the ultrasonic signal produced when a machine rotates in its bearings. The onset of the metal wipe or early frictional wear is indicated by the onset of a periodic feature in this ultrasonic signal which can thus easily be detected.

Embodiments of the invention will now be described in detail by way of example with reference to the accompanying drawings, by way of example, in which:—

Fig. 1 is a graph showing the count of the ultrasonic signal level, the Babbit metal temperature and the oil purging temperature.

Fig. 2 is a diagram showing a bearing and an arrangement of detectors for the ultrasonic signal, the Babbit metal temperature and the oil purging temperature, and a circuit for processing the ultrasonic signal received.

Fig. 3 is a wave form diagram depicting ultrasonic signal output generated by frictional wear.

Fig. 4 is a block diagram of a first embodiment of the present invention.

Fig. 5 is a block diagram of the periodicity decision circuit shown in Fig. 4.

Fig. 6 is a wave form diagram depicting various signals developed at several points in Fig. 5.

Fig. 7 is a block diagram of a second embodiment of the present invention.

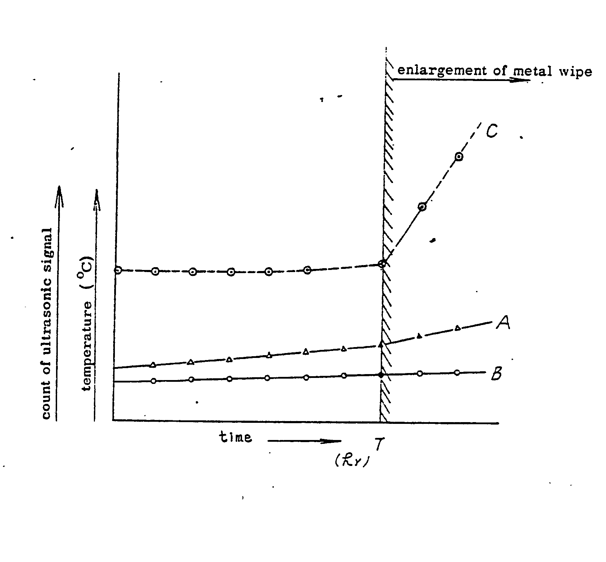

Fig. 1 shows the Babbit metal temperature A, the oil purging temperature B and the count C of the ultrasonic signal plotted against time. These data were obtained from an experiment in which frictional wear was reproduced.

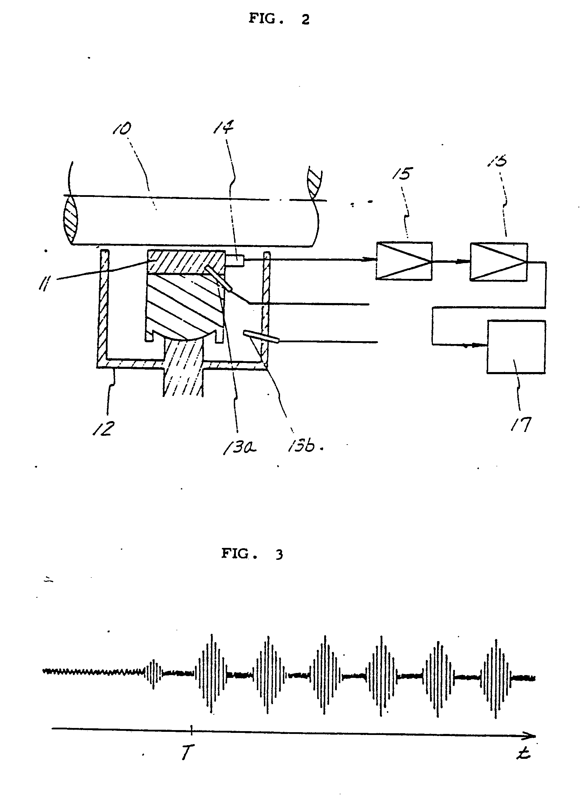

Fig. 2 shows how the Babbit metal temperature A and the oil purging temperature B, respectively, are measured by thermocouples 13a and 13b which are provided in the Babbit metal bearing 11 and the housing 12, respectively. The ultrasonic signal is produced by a transducer 14 fixed to the bearing 11 and is amplified by a preamplifier 15 and a main amplifier 16, and is then counted by a counter 17.

As shown in Fig. 1, the Babbit metal temperature and the oil purging temperature increase monotonically before and after the occurrence of frictional wear (time T). In contrast, the ultrasonic signal level count increased suddenly when frictional wear occurred.

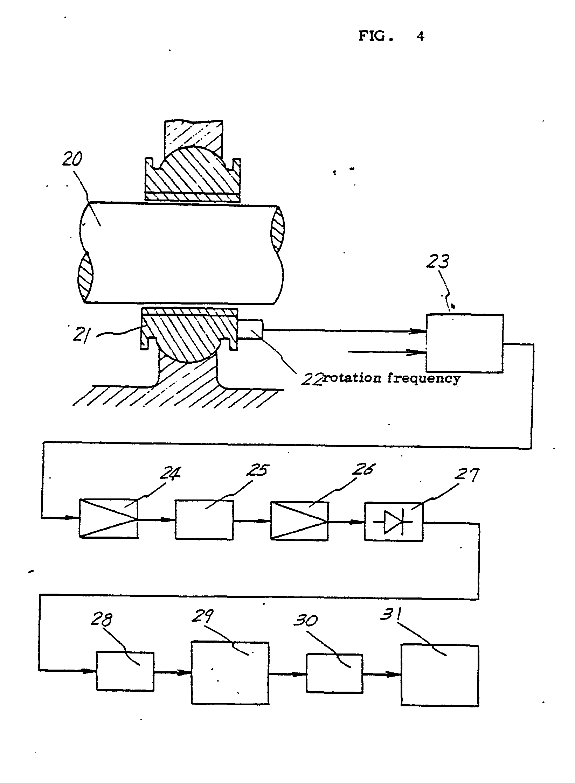

Fig. 3 illustrates a waveform of the ultrasonic signal generated by the frictional wear; the abscissa indicates time, in which T designates the point at which the onset of frictional wear occurs. The ultrasonic signal which appeared at about the same time has an amplitude which is approximately constant.

As described above, the ultrasonic signal generated by the frictional wear has a characteristic period and amplitude. Accordingly, frictional wear can be detected by monitoring such an ultrasonic signal.

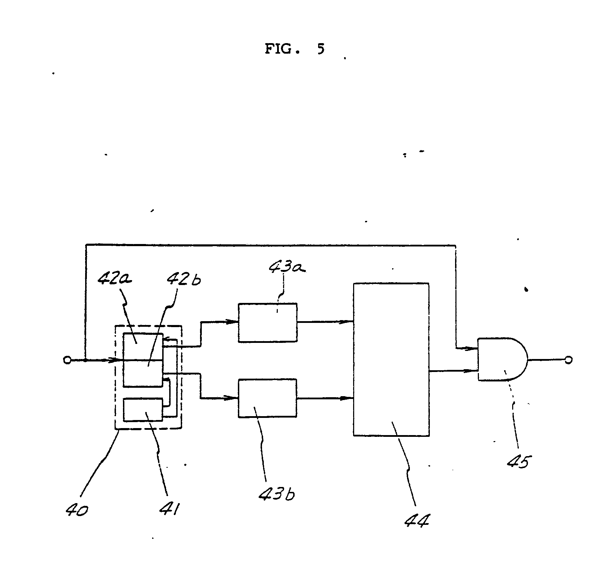

In Fig. 4 which illustrates a first preferred embodiment of the present invention, there are shown a journal 20, a plain bearing 21, and a piezoelectric ceramic transducer element 22. The transducer 22 is fixed by pressure welding or bonding at a position where it receives the ultrasonic signal generated by the frictional wear on the surface of the plain bearing 21. The ultrasonic signal received by the transducer 22 is applied to a turning decision circuit 23 (the turning operation is the preliminary operation of the machine at a speed of about 2 rpm). A rotation frequency is also applied to the circuit 23. The turning decision circuit decides whether the machine is in turning operation or in normal operation, in order to pass the output signal of the transducer 22 to the preamplifier 24 only when the machine is in turning operation. If it is apparent that the machine is in turning operation, the output signal of the transducer 22 is applied directly to the preamplifier 24. The preamplified signal is applied through a noise filter 25 to a main amplifier 26. The amplified signal is passed through a detector 27 and thence to a converter 28. The converter 28 converts the ultrasonic signal into a pulse signal. The pulse signal is then applied to a periodicity detection circuit 29, in which the periodicity of the pulse signal is detected. The output signal of the converter 28 is applied to a counter 30 when the periodicity of the pulse signal is detected, that is, when the output signal (hereinafter referred to as the frictional wear signal) of the circuit 29 indicates the occurrence of frictional wear. The count generated by the output signal is displayed by a display 31.

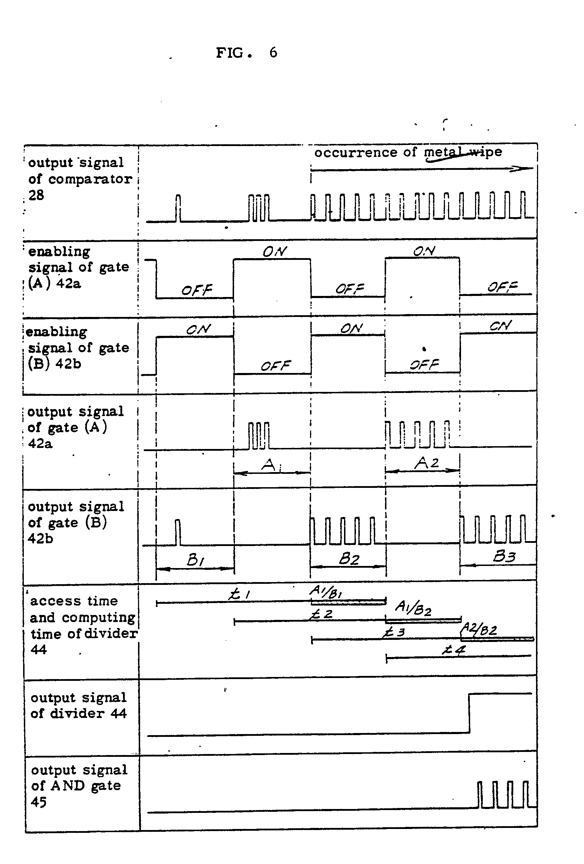

Referring to Figs. 5 and 6, the output signal of the converter 28 is applied to a gate circuit 40, which includes a timer 41. A gate (A) 42a and a gate (B) 42b are operated alternately by the timer 41 so as to pass the output signal to digital memory circuits 43a and 43b, respectively. The digital memory circuits are constructed so that the stored signal is cleared when the next signal is input.

As described above, the ultrasonic signal is generated periodically when the frictional wear occurs. The occurrence of frictional wear can be detected by computing the following ratio.

The signals stored in the digital memory circuits 43a and 43b are applied to a divider 44 every time ($t_1$, $t_2$, $t_3$, ...) a signal is read into the gate circuit 40. The ratio of the output signal A of the circuit 43a to the output signal B of the circuit 43b, that is, $A_1/B_1$, $A_1/B_2$, $A_2/B_2$, etc. is computed by the divider 44. The divider 44 outputs a direct voltage signal of 5 volts when the signal A nearly equals the signal B. Finally, an AND gate 45 performs an AND logical operation in response to the application of the output signal of the comparator 28 and that of the divider 44.

The foregoing operation is clearly illustrated by the waveforms of Fig. 6, wherein the heavy lines in the 6th box ("access time and computing time of divider 44") indicate periods during which the divider computes the ratios $A_1/B_1$ etc. The divider 44 thus reads in the signals $A_2$ and $B_2$ within the time period $t_3$, and computes $A_2/B_2$ within the next time period $t_4$. The ratio $A_2/B_2$ is substantially 1, so that the divider 44 then outputs the direct voltage signal which acts as a gate signal of the AND gate 45. The gate 45 therefore outputs the pulsed signal from the converter 28.

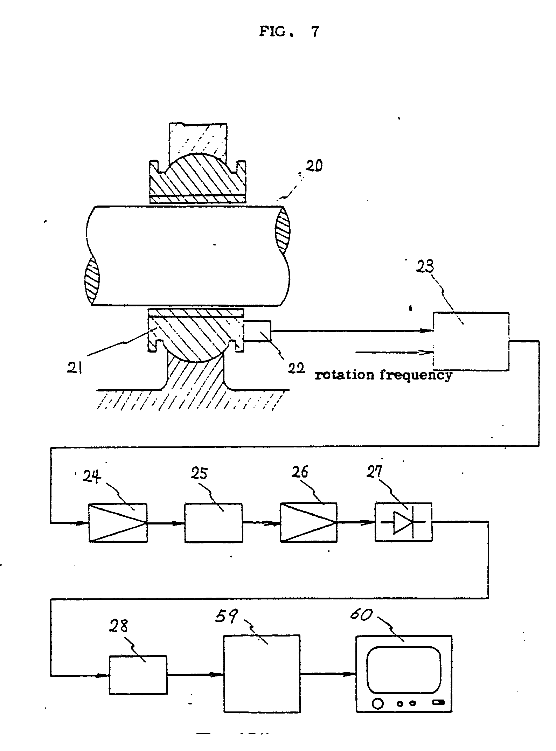

Fig. 7 shows a second embodiment of the present invention. The same reference numerals are used for the parts corresponding to the parts shown in Fig. 4. Reference numeral 59 designates a microcomputer and 60 a CRT display. In this embodiment, the microcomputer 59 is employed instead of the periodicity detection circuit 29 and the counter 30 shown in Fig. 4. The apparatus functions in a similar manner to that of Fig. 4.

**Claims**

1. A method of detecting frictional wear in a plain bearing (21) of a rotary machine by

(a) detecting an ultrasonic signal produced upon rotation of a part in the bearing (21), by means of a transducer (22) located so as to receive said ultrasonic signal and

(b) monitoring the output signal of the said transducer (22) so as to detect a substantial periodicity of the output signal indicative of such frictional wear, characterised in that

in order to determine the presence of the frictional wear which occurs in operation prior to the advent of rubbing damage, the output signal of said transducer (22) is monitored during a turning operation of the machine at a rotary speed substantially less than the operational speed, and the output signal of the transducer (22) arising in a predetermined period of time is compared with the output signal arising in an immediately preceding such predetermined period of time.

2. Apparatus for detecting frictional wear in a plain bearing (21) of a rotary machine, including

a transducer (22) located in relation to said bearing to receive the ultrasonic signal produced upon rotation of a part in said bearing (21), and adapted to provide an output in dependence on said ultrasonic signal, and a periodicity detecting circuit (29) for monitoring the output signal of said transducer (22) so as to detect a substantive periodicity of the output signal indicative of such frictional wear, characterised by

a turning decision circuit (23) for receiving a rotation frequency signal and the output signal of the transducer (22) and for deciding whether or not the machine is in a turning operation at a speed substantially less than the operational speed, and for passing the output signal of the transducer (22) while the rotary machine is in a turning operation, means (28) for receiving the output signal from the turning decision circuit (23) and for converting it into a pulse signal, the periodicity detecting circuit (29) including means (40) for receiving and means (43) for storing the pulse signals received over a predetermined period of time, means (44) for comparing such a stored pulse signal relating to a predetermined period of time with that relating to an immediately preceding predetermined period of time and means (45) for providing an output signal indicative of an occurrence of frictional wear in dependence on the result of this comparison.

## Patentansprüche

1. Verfahren zum Feststellen von Reibungsverschleiß in einem Gleitlager (21) einer rotierenden Maschine durch

(a) Erfassen eines bei Rotation eines Teils in dem Lager (21) erzeugten Ultraschallsignals mittels eines Wandlers (22), der so angeordnet ist, daß er das Ultraschallsignal aufnimmt, und

(b) Überwachen des Ausgangssignals des Wandlers (22) zur Erfassung einer einen solchen Reibungsverschleiß angebenden wesentlichen Periodizität des Ausgangssignals,

dadurch gekennzeichnet, daß zur Feststellung des Reibungsverschleißes, der beim Betrieb vor dem Eintritt von Beschädigung durch Reibung auftritt, das Ausgangssignal des Wandlers (22) während eines Drehbetriebs der Maschine mit einer Drehzahl, die wesentlich niedriger als die Betriebsdrehzahl, überwacht und das in einer vorgegebenen Zeitspanne auftretende Ausgangssignal des Wandlers (22) mit dem unmittelbar vor dieser vorgegebenen Zeitspanne auftretenden Ausgangssignal verglichen wird.

2. Vorrichtung zur Feststellung von Reibungsverschleiß in einem Gleitlager (21) einer rotierenden Maschine, mit einem Wandler (22), der bezüglich des Lagers so angeordnet ist, daß er das bei Rotation eines Teils in dem Lager (21) erzeugte Ultraschallsignal aufnimmt, und der ein Ausgangssignal in Abhängigkeit von dem Ultraschallsignal erzeugt, und einer Periodizitäts-Erfassungsschaltung (29) zum Überwachen des Ausgangssignals des Wandlers (22) zur Erfassung einer einen derartigen Reibungsverschleiß angebenden wesentlichen Periodizität des Ausgangssignals, gekennzeichnet durch eine Drehungs-Entscheidungsschaltung (23) zur Aufnahme eines Rotationsfrequenzsignals sowie des Ausgangssignals des Wandlers (22) und zum Entscheiden, ob sich die Maschine in einem Drehbetrieb mit wesentlich geringerer Drehzahl als der Betriebsdrehzahl befindet oder nicht, und zur Weitergabe des Ausgangssignals des Wandlers (22), während sich die rotierende Maschine in einem Drehbetrieb befindet, sowie einer Einrichtung (28) zur Aufnahme des Ausgangssignals der Drehungs-Entscheidungsschaltung (23) und zum Umsetzen dieses Signals in ein Impulssignal, wobei die Periodizitäts-Erfassungsschaltung (29) eine Einrichtung (40) zur Aufnahme und eine Einrichtung (43) zum Speichern der über eine vorgegebene Zeitspanne empfangenen Impulse, eine Einrichtung (44) zum Vergleichen eines solchen, auf eine vorgegebene Zeitspanne bezogenen Impulssignals mit dem auf eine unmittelbar vorhergehende Zeitspanne bezogenen Impulssignal, une eine Einrichtung (45) zur Erzeugung eines das Auftreten von Reibungsverschleiß anzeigenden Ausgangssignals in Abhängigkeit vom Vergleichsergebnis umfaßt.

## Revendications

1. Procédé pour détecter l'usure par frottement dans un palier lisse (21) d'une machine tournante, grâce à

a) la détection d'un signal ultrasonique produit lors de la rotation d'une pièce dans le palier (21), au moyen d'un transducteur (22) situé de manière à recevoir ledit signal ultrasonique, et

b) le contrôle du signal de sortie dudit transducteur (22) de manière à détecter une périodicité substantielle du signal de sortie indicative d'une telle usure par frottement, caractérisé en ce que

— afin de déterminer l'existence d'une usure par frottement qui se produit au cours du fonctionnement avant l'apparition d'un endommagement par frottement, le signal de sortie dudit transducteur (22) est contrôle pendant un fonctionnement de la machine en rotation à une vitesse de rotation nettement inférieure à la vitesse opérationnelle, et le signal de sortie du transducteur (22), qui apparaît pendant un intervalle de temps prédéterminé, est comparé au signal de sortie qui apparaît pendant un intervalle de temps qui précède immédiatement un tel intervalle de temps prédéterminé.

2. Appareil pour détecter une usure par frottement dans un palier lisse (21) d'une machine tournante, comprenant

— un transducteur (22) disposé par rapport audit palier de manière à recevoir le signal ultrasonique produit lors de la rotation d'une pièce dans ledit palier (21), et apte à délivrer un signal de sortie en fonction dudit signal ultrasonique, et

— un circuit (29) de détection d'une périodicité, servant à contrôler le signal de sortie dudit transducteur (22) de manière à détecter une périodicité substantielle du signal de sortie, indicative d'une telle usure par frottement, caractérisé par

— un circuit discriminateur (23) déterminant l'existence d'une rotation, qui reçoit un signal de la fréquence de rotation et le signal de sortie du transducteur (22) et qui établit si la machine exécute ou non un mouvement de rotation à une vitesse nettement inférieure à la vitesse opérationnelle, et qui transmet le signal de sortie du transducteur (22) alors que la machine tournante est en rotation, des moyens (28) servant à recevoir le signal de sortie délivré par le circuit discriminateur (23) déterminant l'existence d'une rotation, et servant à transformer ce signal en un signal impulsionnel, le circuit (29) de détection d'une périodicité comprenant des moyens (40) servant à recevoir et des moyens (43) servant à mémoriser les signaux impulsionnels reçus pendant un intervalle de temps prédéterminé, des moyens (44) servant à comparer un tel signal impulsionnel mémorisé, associé à un intervalle de temps prédéterminé, à un tel signal associé à un intervalle de temps prédéterminé directement antérieur, et des moyens (45) servant à délivrer un signal de sortie indiquant l'apparition d'une usure par frottement en fonction de résultat de cette comparaison.

FIG. 2

FIG. 3

FIG. 4

rotation frequency

FIG. 5

FIG. 6

| | |
|---|---|
| output signal of comparator 28 | occurrence of metal wipe |
| enabling signal of gate (A) 42a | ON   ON   OFF   OFF   OFF |
| enabling signal of gate (B) 42b | ON   ON   CN   OFF   OFF |
| output signal of gate (A) 42a | $A_1$   $A_2$ |
| output signal of gate (B) 42b | $B_1$   $B_2$   $B_3$ |
| access time and computing time of divider 44 | $t_1$   $A_1/B_1$   $A_1/B_2$   $t_2$   $t_3$   $A_2/B_2$   $t_4$ |
| output signal of divider 44 | |
| output signal of AND gate 45 | |

FIG. 7

rotation frequency